# EUROPÄISCHE PATENTSCHRIFT

(11) **EP 3 321 060 B1**
(45) Veröffentlichungstag und Bekanntmachung des Hinweises auf die Patenterteilung: **01.04.2020**
(21) Anmeldenummer: 17201485.4
(22) Anmeldetag: 14.11.2017
(51) Int. Cl.: B29C 45/27

(54) **SPRITZGIESSDÜSENVORRICHTUNG**
INJECTION MOULDING DEVICE
DISPOSITIF DE BUSE DE MOULAGE PAR INJECTION

(30) Priorität: 15.11.2016 DE 102016121964
(43) Veröffentlichungstag der Anmeldung: 16.05.2018
(73) Patentinhaber: GÜNTHER Heisskanaltechnik GmbH, 35066 Frankenberg (DE)
(72) Erfinder: Sommer, Siegrid, 35099 Burgwald (DE); Günther, Herbert, 35108 Allendorf (DE); Schnell, Torsten, 35104 Lichtenfels (DE)
(74) Vertreter: Patentanwälte Olbricht Buchhold Keulertz

(56) Entgegenhaltungen:
- DE-A1-102006 018 336
- DE-A1-102008 017 931
- DE-U1-202007 001 789
- DE-U1-202007 017 083

## Beschreibung

Die Erfindung betrifft eine Spritzgießdüsenvorrichtung gemäß Anspruch 1.

Spritzgießdüsen werden in Spritzgießwerkzeugen eingesetzt, um eine fließfähige Masse bei einer vorgebbaren Temperatur unter hohem Druck einem trennbaren Werkzeugblock (Formnest) zuzuführen. Sie haben gewöhnlich einen Düsenkörper in Form eines Materialrohrs, in dem ein Strömungskanal für die fließfähige Masse ausgebildet ist. Dieser endet in einem Düsenmundstück, das endseitig in das Materialrohr eingesetzt ist und die Austrittsöffnung für den Strömungskanal bildet.

Damit sich die zumeist heiße Masse innerhalb der Düse nicht vorzeitig abkühlt, ist eine elektrische Heizung vorgesehen, welche das Materialrohr bzw. den darin ausgebildeten Strömungskanal konzentrisch umgibt. Dadurch ist es möglich, die fließfähige Masse bis in die Düsenspitze hinein auf einer konstanten Temperatur zu halten. Eine thermische Trennung zwischen dem heißen Gehäuse und dem meist gekühlten Werkzeug sorgt dafür, dass die Düse - insbesondere im Bereich der Düsenspitze - nicht einfriert und gleichzeitig das Werkzeug (Formnest) nicht erwärmt wird. Zur Überwachung der Temperatur verwendet man gewöhnlich einen Temperaturfühler.

Materialrohr und Heizung können als separate Bauelemente ausgeführt sein, wobei die Heizung gemeinsam mit dem Temperaturfühler in einer Ummantelung integriert ist, die umfangsseitig auf das Materialrohr aufgeschoben wird. Man kann die Heizung aber auch in das Materialrohr integrieren, beispielsweise als Rohrheizkörper oder als Rohrschlange, oder man bringt die Heizung stoffschlüssig als Schichtheizung auf dem Materialrohr auf.

Das Materialrohr sitzt meist in einem Gehäuse, das derart mit einer Verteilerplatte im Spritzgießwerkzeug in Verbindung steht, dass der Strömungskanal im Materialrohr mit den Strömungskanälen in der Verteilerplatte in Strömungsverbindung steht. Zwischen dem Materialrohr und dem Gehäuse ist ein Luftspalt zur thermischen Isolation ausgebildet. Für eine stabile Lagerung stützt sich das Gehäuse auf dem vorderen und hinteren Ende des Materialrohrs ab. Das Luftvolumen im Luftspalt ist so weitestgehend abgedichtet. Nachteilhaft sind hierbei entstehende Wärmebrücken an den Kontaktstellen zum Materialrohr. Das Gehäuse wiederum stützt sich an der Verteilerplatte und/oder der Formplatte ab, was den Wärmeabfluss vom Materialrohr auf das Gehäuse noch verstärkt. Dies führt nicht nur zu einem erhöhten Energiebedarf für die Beheizung, sondern auch zu einer thermischen Ungleichverteilung über der Länge des Materialrohrs.

In den Offenlegungsschriften DE 10 2006 018 336 A1, DE 20 2007 017 083 U1 und DE 20 2007 001 789 U1 ist jeweils eine Heißkanaldüse mit einem Gehäuse offenbart, wobei ein oberer Teil des Gehäuses einen Ringraum um das Materialrohr ausbildet.

Der vorliegenden Erfindung liegt demgegenüber die Aufgabe zugrunde eine verbesserte Spritzgießdüsenvorrichtung zu schaffen, welche ein gleichmäßiges Temperaturprofil über die Länge eines Materialrohrs ermöglicht.

Hauptmerkmale der Erfindung sind im kennzeichnenden Teil von Anspruch 1 angegeben. Ausgestaltungen sind Gegenstand der Ansprüche 2 bis 14.

Die Erfindung betrifft eine Spritzgießdüsenvorrichtung mit wenigstens einem Materialrohr, wobei sich das wenigstens eine Materialrohr in einer Längsrichtung erstreckt. In dem wenigstens einen Materialrohr ist ein Strömungskanal für eine fließfähige Masse ausgebildet, wobei das wenigstens eine Materialrohr an einem vorderen Ende des Strömungskanals eine Düsenspitze mit wenigstens einer Austrittsöffnung für die fließfähige Masse aufweist. An einem hinteren Ende des Strömungskanals weist das wenigstens eine Materialrohr wenigstens eine Eintrittsöffnung für die fließfähige Masse auf und ist an einer Montageplatte festgelegt, wobei die Montageplatte ein Verteiler eines Spritzgießwerkzeugs ist. Das wenigstens eine Materialrohr ist mit einer Heizvorrichtung beheizt, wobei das wenigstens eine Materialrohr in einem Gehäuse angeordnet ist und innerhalb des Gehäuses in einem in Längsrichtung ausgerichteten Abschnitt mit Ausnahme der Heizvorrichtung am Außenumfang kontaktlos angeordnet ist, wobei das Gehäuse einen einstückigen Abstandshalter und je Materialrohr eine Führungshülse aufweist, wobei jede Führungshülse an dem Abstandshalter befestigt ist, und wobei der Abstandshalter an der Montageplatte festlegbar ist und den Abstand zwischen Führungshülse und Montageplatte definiert. Der Abschnitt ist ferner benachbart zu der Montageplatte angeordnet und erstreckt sich jeweils von der Montageplatte bis zu dem vorderen Ende des Materialrohres.

Vorteilhaft hieran ist, dass am Materialrohr keine Wärmebrücken durch andere Bauteile in der Nähe der Montageplatte ausgebildet sind, da sich das Gehäuse nicht an dem Materialrohr abstützt. Entsprechend fließt hier wenig Wärme vom Materialrohr ab. Der Energiebedarf zum Betrieb der Heizvorrichtung ist hierdurch geringer und es wird eine gleichmäßigere Temperaturverteilung über die Länge des Materialrohrs erzielt. Ferner ist durch einen einstückigen Abstandshalter eine einfache Halterung und Positionierung der Führungshülsen für die Materialrohre möglich.

Der Abstandshalter ist dabei nach einer Ausführungsform als umlaufender Rahmen ausgeführt, der das wenigstens eine Materialrohr radial einfasst und von dem wenigstens einen Materialrohr beabstandet ist. Dabei kann der Rahmen beispielweise aus Metall oder einer Keramik bestehen. Durch einen umlaufenden Rahmen, welcher an der Montageplatte befestigt ist und die Führungshülsen trägt, kann ein besonders stabiler Aufbau der Spritzgießdüsenvorrichtung erreicht werden. Eine auf die Führungshülsen oder den Rahmen einwirkende Kraft kann nämlich gleichmäßig über eine große Auflagefläche an die Montageplatte übertragen werden. Der Rahmen muss dabei nicht zwingend über seinen gesamten Umfang an der Montageplatte anliegen. Es ist vielmehr möglich, dass der Rahmen nur punktuell aufliegt. Durch eine punktuelle Auflage des Rahmens kann eine verbesserte thermische Entkopplung des Rahmens und folglich auch der Führungshülsen von der Montageplatte erreicht werden.

Grundsätzlich kann der Rahmen eine beliebige Geometrie aufweisen. Grenzen für die Gestaltungsmöglichkeiten ergeben sich jedoch aus der Anforderung, dass der Abstandshalter den Kräften basierend auf den Einspritzdrücken von bis zu 2000 bar standhalten muss, weswegen entsprechende Maschinendüsenanlagekräfte vorliegen, um das Formwerkzeug geschlossen halten zu können.

Vorzugsweise weist der Rahmen dabei wenigstens eine Ausnehmung auf, durch die wenigstens ein Materialrohr von außerhalb des Rahmens zugänglich ist. Durch die wenigstens eine Ausnehmung ist eine Verkabelung und Energieversorgung der Heizvorrichtung, sowie das Auslesen von innerhalb des Rahmens vorhandenen Temperaturfühlern möglich. Dabei sind die Ausnehmungen vorzugsweise so gestaltet, dass durch die Ausnehmungen hindurch vorhandene Kontakte der Heizvorrichtung leicht erreichbar sind. Ferner sind die Ausnehmungen vorzugsweise so dimensioniert, dass sie die Stabilität des Rahmens so wenig wo möglich beeinflussen.

Zur Festlegung der wenigstens einen Führungshülse an dem Abstandshalter ist nach einer Ausführungsform vorgesehen, dass die wenigstens eine Führungshülse ein Koppelmittel aufweist. Das Koppelmittel kann dabei für eine kraftschlüssige und/oder formschlüssige Verbindung mit dem Abstandshalter ausgebildet sein. Dabei ist das Koppelmittel vorzugsweise einstückig mit der Führungshülse ausgebildet, um eine ausreichende Stabilität zu gewährleisten. Beispielsweise kann es sich bei dem Koppelmittel um einen Teil eines Bajonettverschlusses handeln, welcher dazu ausgebildet ist, in ein entsprechend gegenstückiges Koppelmittel des Abstandshalters einzugreifen.

Nach einer bevorzugten Ausführungsform handelt es sich bei dem Koppelmittel um ein Außengewinde. Das Außengewinde ist dabei vorzugsweise an einem hinteren, der Montageplatte zugewandten Ende der Führungshülse angeordnet. In dem Abstandshalter sind in diesem Fall zu den Außengewinden gegenstückige Innengewinde vorgesehen, sodass die wenigstens eine Führungshülse in den Abstandshalter eingeschraubt werden kann. Dabei ist in dem Abstandshalter vorzugsweise ein Anschlag ausgebildet, welcher die mögliche Einschraubtiefe einer Führungshülse begrenzt. Bei der Montage der Spritzgießdüsenvorrichtung in einem Spritzgießwerkzeug kann vorgesehen sein, dass sich der Abstandshalter in der montierten Position an der Formplatte einer Spritzgießanlage abstützt. Da die Formplatte üblicherweise gekühlt ist, sollte eine thermische Kontaktierung der Führungshülse und mithin des wenigstens einen Materialrohrs so gut es geht vermieden werden. Hierzu kann nach einer bevorzugten Ausführungsform vorgesehen sein, dass die Einschraubtiefe der Führungshülse genau so gewählt ist, dass die Führungshülse nicht über die Stirnseite des Abstandshalters hervorsteht, mit der der Abstandshalter auf der Formplatte aufliegt. So kann eine Wärmebrücke an dieser Stelle vermieden werden. Vorzugsweise verbleibt in dieser Ausführung zwischen der Führungshülse und der Formplatte ein Luftspalt von etwa 1 mm.

Nach einer hierzu alternativen Ausführungsform handelt es sich bei dem Koppelmittel um eine Auskragung an einem dem hinteren Teil der Montageplatte zugewandten Ende des wenigstens einen Materialrohrs, wobei das Gehäuse ein zusätzliches Fixierelement aufweist, das so an dem Abstandshalter festlegbar ist, dass das Koppelmittel zwischen dem Fixierelement und dem Abstandshalter eingeklemmt ist. Beispielsweise kann es sich bei dem Fixierelement um eine Plateauanordnung handeln, in der Ausnehmungen zur Aufnahme der wenigstens einen Führungshülse ausgebildet sind. Zur Befestigung der wenigstens einen Führungshülse, kann diese zunächst durch die Ausnehmung geführt werden, bis die Führungshülse mit ihrer Auskragung an einer Oberfläche des Fixierelements aufliegt. Anschließend wird das Fixierelement an dem Abstandshalter befestigt, beispielsweise verschraubt, sodass die Auskragung zwischen Fixierelement und Abstandshalter eingeklemmt ist.

Um die Positionierung und Montage einer Führungshülse mit einer Auskragung zu vereinfachen, ist nach einer weiteren Ausführungsform vorgesehen, dass in dem Abstandshalter und/oder dem Fixierelement eine Aufnahmegeometrie für das Koppelmittel ausgebildet ist. Bei der Aufnahmegeometrie kann es sich beispielsweise um eine Ausnehmung handeln, welche in ihrer Form an die Form der Auskragung angepasst ist. Bei der Montage der Führungshülse kann dann die Auskragung in die entsprechende Aufnahmegeometrie eingesetzt werden, sodass die Führungshülse mit Ihrer Auskragung in der Aufnahmegeometrie gelagert ist. Auf diese Weise kann eine Vorpositionierung der Führungshülse erreicht werden, welche den Zusammenbau der Spritzgießdüsenvorrichtung erleichtert.

Neben den zuvor beschriebenen lösbaren Verbindungen zwischen Führungshülse und Abstandshalter, kann auch eine dauerhafte Verbindung vorgesehen sein. Hierzu können Führungshülse und Abstandshalter beispielsweise stoffschlüssig verbunden, beispielsweise verschweißt werden.

Wie zuvor bereits ausgeführt wurde, ist der Abstandshalter an der Montageplatte festlegbar. Hierzu ist nach einer Ausführungsform vorgesehen, dass der Abstandshalter mittelbar oder unmittelbar mit der Montageplatte verschraubt ist. Für eine unmittelbare Verschraubung des Abstandshalters mit der Montageplatte können beispielsweise Ösen in oder an dem Abstandshalter angeordnet sein, in die eine Schraube eingreifen kann, welche wiederum in die Montageplatte eingeschraubt wird. Die Ösen sind dabei vorzugsweise einstückig mit dem Abstandshalter ausgeführt. Eine mittelbare Verschraubung kann beispielsweise realisiert werden, indem das zuvor beschriebene Fixierelement des Gehäuses so mit der Montageplatte verschraubt wird, dass durch ein Festziehen der Schrauben das Fixierelement eine Kraft auf den Abstandshalter in Richtung Montageplatte ausübt. Hierdurch kann der Abstandshalter zwischen der Montageplatte und dem Fixierelement eingeklemmt werden. Dabei kann durch entsprechende Positionierhilfen und Verdrehsicherungen die korrekte Ausrichtung des Abstandshalters gewährleistet werden.

Gemäß einer näheren Ausgestaltung der Spritzgießdüsenvorrichtung ist die Heizvorrichtung in dem Abschnitt mit Ausnahme der Materialrohre kontaktlos angeordnet. Entsprechend fließt auch von der Heizvorrichtung im Abschnitt keine Wärme an Bauteile außer dem Materialrohr ab. Ein unbeabsichtigtes Erwärmen einer gegenüberliegenden Formplatte wird ebenfalls vermieden.

In einer speziellen Ausgestaltung beträgt die Länge des Abschnitts in Längsrichtung wenigstens die Hälfte der Gesamtlänge des Materialrohres in Längsrichtung. Damit ist ein langer Abschnitt thermisch entkoppelt von anderen Bauteilen, sodass wenig Wärme abfließt.

In einer weiteren optionalen Ausführung ist an dem hinteren Ende an jedem der Materialrohre ein Koppelmittel zum Festlegen des Materialrohrs an der Montageplatte ausgebildet. Vorzugsweise ist das Koppelmittel ein Gewinde, insbesondere ein Außengewinde, oder ein Bajonettmittel. Hiermit wird eine feste und dichte Verbindung ermöglicht.

Ferner trägt optional jedes der Materialrohre umfangseitig ein elektrisches Heizelement der Heizvorrichtung, und die Heizelemente sind im Bereich des Abschnitts mit Ausnahme des Materialrohrs kontaktlos angeordnet. Diese Heizelemente können zur gleichmäßigen Temperierung insbesondere hülsen- oder manschettenförmig ausgebildet sein. Zudem erstrecken sich die Heizelemente bevorzugt von dem vorderen Ende des Materialrohrs bis zum Anschlag oder der Montageplatte am hinteren Ende.

Gemäß einer abweichenden oder ergänzenden Variante weist die Heizvorrichtung jeweils eine Heizpatrone auf. Diese sitzt entweder im Strömungskanal der Materialrohre oder aber sie ist in Längsrichtung in die Wandung der Materialrohre eingeschoben. Mit der ersten Variante ist eine direkte Beheizung der fluiden Masse im Strömungskanal und im Inneren des Materialrohrs möglich. Die zweite Variante erlaubt eine einfache Montage und Austauschbarkeit.

Um die Montage der Spritzgießdüsenvorrichtung in einem Spritzgießwerkzeug zu vereinfachen, ist nach einer Ausführungsform an dem Abstandshalter wenigstens ein Positionierelement ausgebildet, welches zur Positionierung der Spritzgießdüsenvorrichtung in einem Spritzgießwerkzeug ausgebildet ist. Beispielsweise kann es sich bei den Positionierelementen um Stifte oder Bolzen handeln, welche von dem Abstandshalter hervorstehen und in montierter Position der Spritzgießdüsenvorrichtung in entsprechende Aufnahmen einer Formplatte eines Spritzgießwerkzeugs eingreifen. In der zuvor beschrieben Ausführungsform, in der das Gehäuse ein zusätzliches Fixierelement aufweist, können solche Positionierelemente auch an dem Fixierelement ausgebildet sein.

Nach einer bevorzugten Ausführungsform stützt sich die wenigstens eine Führungshülse ausschließlich am vorderen Ende des wenigstens einen Materialrohrs mittelbar oder unmittelbar ab. Durch eine solche punktuelle Abstützung kann ein Wärmeübergang von dem Materialrohr auf die Führungshülse minimiert werden.

Nach einer weiteren Ausführungsform ist die wenigstens eine Führungshülse zweigeteilt, wobei ein vorderes Hülsenende aus einem ersten Material besteht und wobei ein hinteres Hülsenende aus einem zweiten Material besteht, wobei das vordere Hülsenende mit dem hinteren Hülsenende verbunden ist. Beispielsweise kann das vordere Hülsenende mit dem hinteren Hülsenende über eine Schraub- oder Bajonettverbindung verbunden sein. Ferner kann es sich bei der Verbindung der Hülsenenden auch um eine stoffschlüssige Verbindung handeln. Das erste Material des vorderen Hülsenendes besteht dabei vorzugweise aus einem nur wenig wärmeleitenden Metall, sodass ein Wärmetransfer von dem Materialrohr auf die Führungshülse reduziert ist. Besonders bevorzugt besteht das vordere Hülsenende aus Titan.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Spritzgießdüsenvorrichtung mit Düsenschäften;
- Fig. 2: einen Längsschnitt durch eine Spritzgießdüsenvorrichtung gemäß Fig. 1,
- Fig. 3: einen zu Fig. 2 senkrechten Längsschnitt durch eine Spritzgießdüsenvorrichtung gemäß Fig. 1,
- Fig. 4: zwei Längsschnitte von Spritzgießdüsenvorrichtungen mit einem einzelnen Materialrohr, und
- Fig. 5: zwei weitere Längsschnitte von Spritzgießdüsenvorrichtungen mit einem einzelnen Materialrohr.

Im Folgenden werden einander ähnliche oder identische Merkmale mit denselben Bezugszeichen gekennzeichnet.

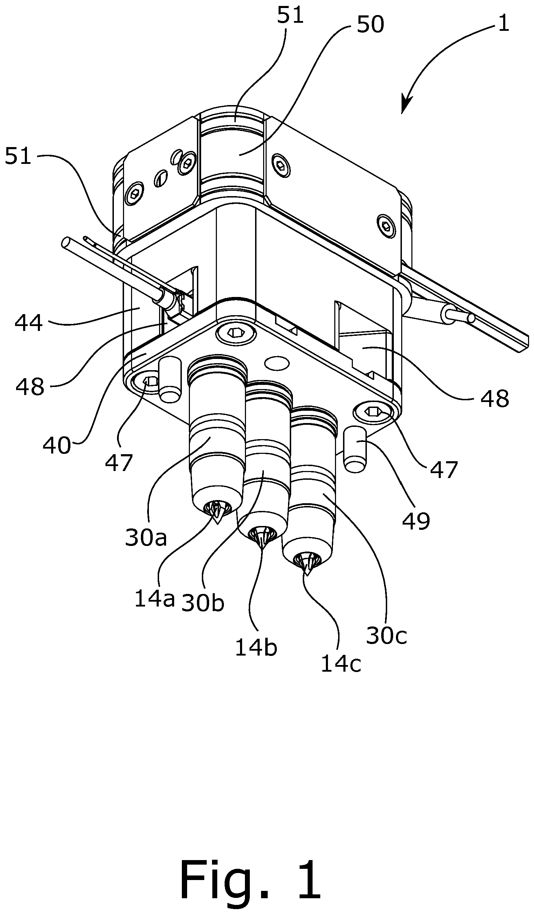

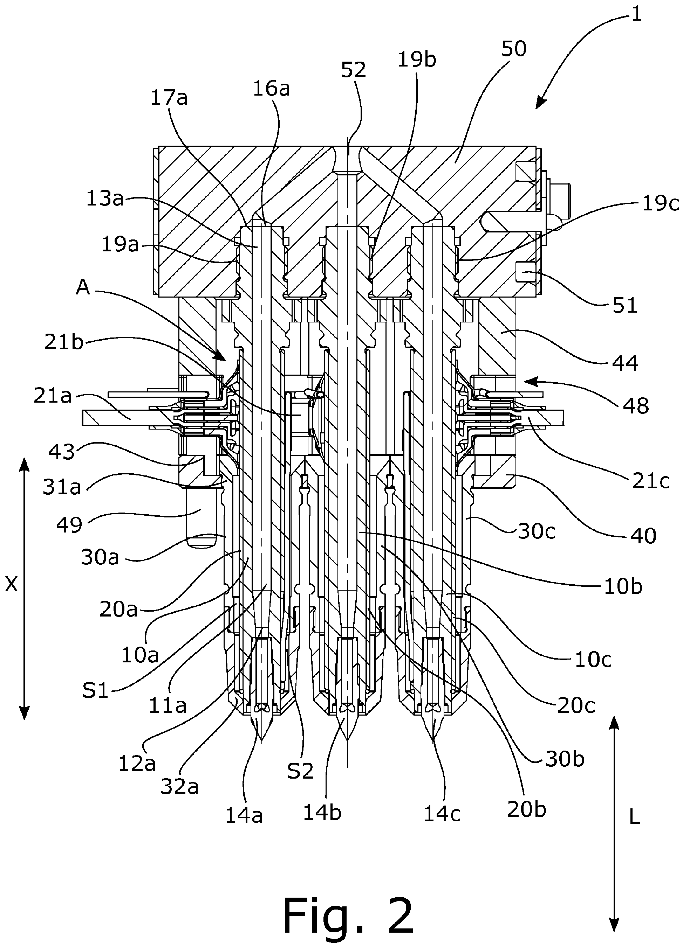

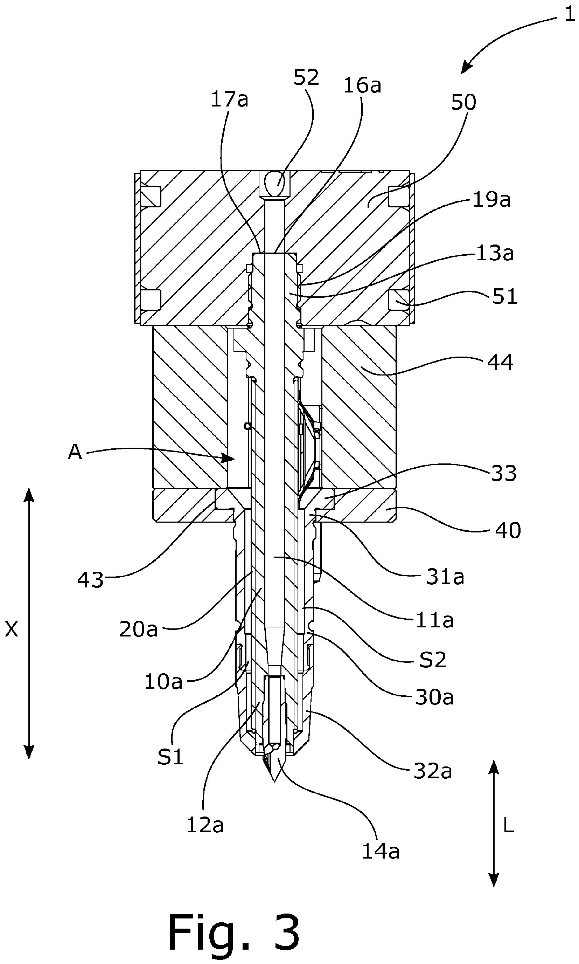

In Fig. 1 ist in perspektivischer Ansicht eine Spritzgießdüsenvorrichtung 1 gezeigt. Fig. 2 zeigt einen Längsschnitt durch die Spritzgießdüsenvorrichtung 1 nach Fig. 1, während Fig. 3 einen zu der Darstellung der Fig. 2 senkrechten Längsschnitt durch die Spritzgießdüsenvorrichtung 1 zeigt.

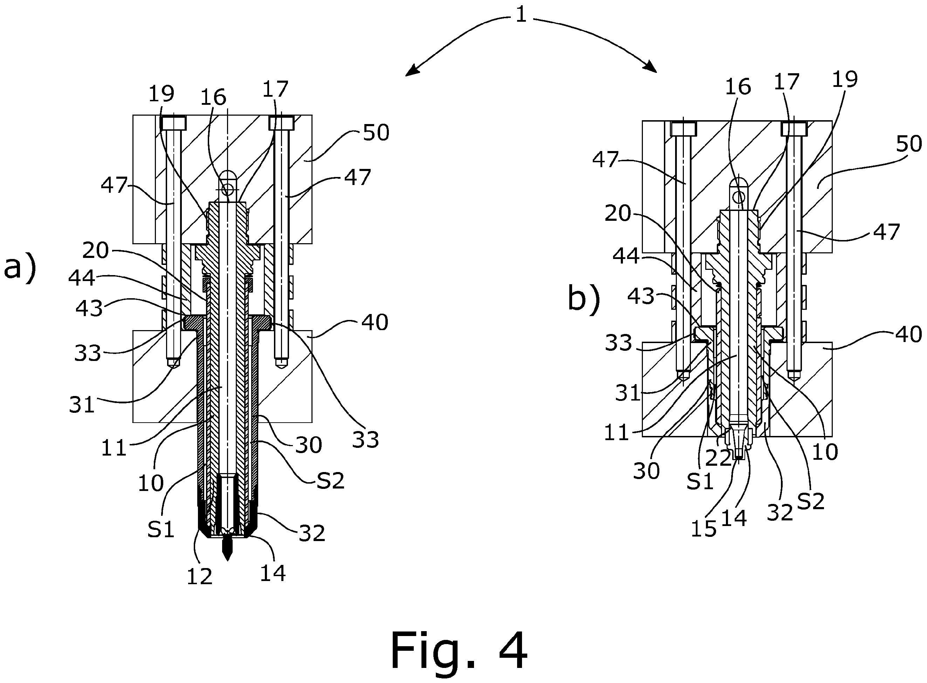

Den Ausführungsformen der Fig. 1, 2 und 3 ist gemein, dass die Spritzgießdüsenvorrichtung 1 über drei baugleiche Materialrohre 10a, 10b, 10c verfügt, von denen in den Fig. 1 und 2 drei und in Fig. 3 nur eines sichtbar ist. Jedes der Materialrohre 10a, 10b, 10c erstreckt sich in einer Längsrichtung L, d.h. die Materialrohre 10a, 10b, 10c sind parallel zueinander ausgerichtet. Insbesondere in Fig. 2 und 3 erkennt man, dass in jedem der Materialrohre 10a, 10b, 10c ein Strömungskanal 11 a für eine fließfähige Masse ausgebildet ist. Weiterhin verfügt jedes der Materialrohre 10a, 10b, 10c an einem vorderen Ende 12a des Strömungskanals 11a über eine Düsenspitze 14a, 14b, 14c mit wenigstens einer Austrittsöffnung für die fließfähige Masse. Die Düsenspitzen 14, 14a, 14b, 14c sind alle baugleich und in den Figuren 1, 2, 3, 4a) und 5a) als offene Düsenspitzen ausgeführt. Es ist jedoch durchaus auch möglich, die Düsenspitzen 14, 14a, 14b, 14c mit einem Nadelverschluss ausgebildet sind, wie es in den Figuren 4b) und 5b) dargestellt ist.

Jedes der Materialrohre 10a, 10b, 10c hat an einem hinteren Ende 13a des Strömungskanals 11a wenigstens eine Eintrittsöffnung 16a für die fließfähige Masse sowie einen Anschlag 17a zur definierten Positionierung an einer Montageplatte 50. Bei der Montageplatte 50 kann es sich beispielsweise um den Verteiler eines Spritzgießwerkzeugs handeln. Folglich kann die Montageplatte 50 mit einer Heizung 51 ausgestattet sein, wie es beispielhaft in den Figuren 1, 2 und 3 dargestellt ist. Die Heizung 51 ist dabei in eine entsprechende Nut in der Montageplatte 50 eingesetzt. Wie in Fig. 2 und 3 dargestellt ist, weist die Montageplatte 50 eine zentrale Eintrittsöffnung auf, an die ein Verteiler oder eine zentrale Maschinendüse angeschlossen werden kann.

Weiterhin ist jedes der Materialrohre 10a, 10b, 10c mit einer Heizvorrichtung 20a, 20b, 20c beheizt. Hierzu trägt jedes Materialrohr 10a, 10b, 10c umfangseitig ein hülsenförmiges Heizelement, das über Anschlüsse 21a, 21b, 21c mit einer Energieversorgung verbunden ist. Vorzugsweise handelt es sich bei dem Heizelement 10a, 10b, 10c um eine Trägerhülse mit einer Dickschichtheizung. Optional können jedoch auch etwaige andere Heizer eingesetzt werden.

An dem hinteren Ende 13a ist an jedem der Materialrohre 10a, 10b, 10c ein Koppelmittel 19a zum Festlegen des Materialrohrs 10a, 10b, 10c an der Montageplatte 50 ausgebildet. Es handelt sich in der dargestellten Ausführungsform um ein Außengewinde. Zwischen dem Koppelmittel 19a und dem vorderen Ende 12a, insbesondere benachbart zum Koppelmittel 19a kann an jedem der Materialrohre 10a, 10b, 10c eine Werkzeugaufnahme angeordnet sein, um die Koppelmittel 19a in die Montageplatte 50 einschrauben zu können.

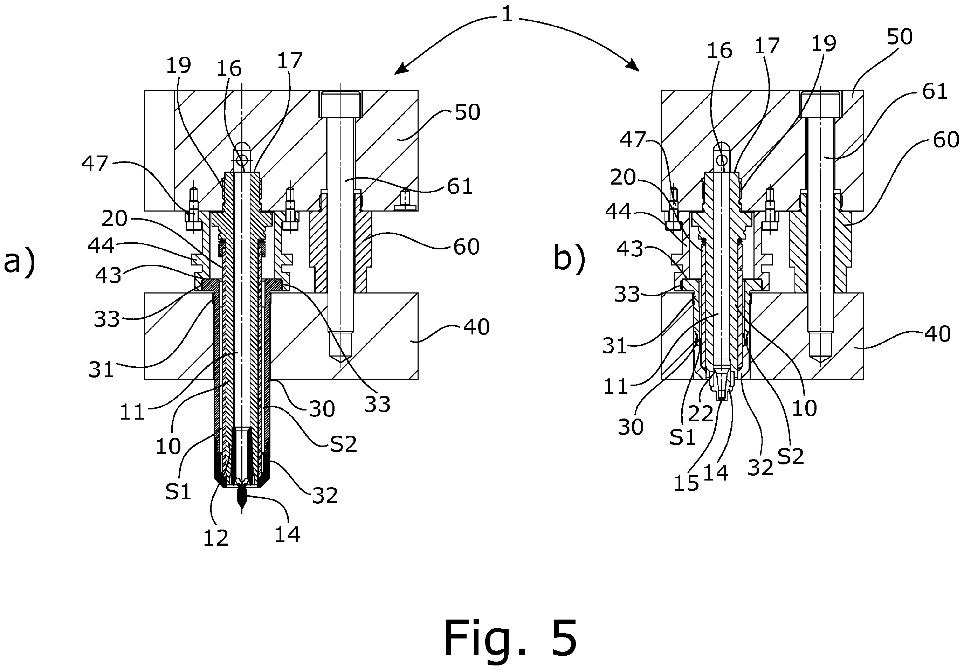

Die Figuren 4 a) und b), wie auch die Figuren 5 a) und b) zeigen einen im Wesentlichen hierzu gleichen Aufbau einer Spritzgießdüsenvorrichtung 1. Allerdings ist in den Ausführungsformen der Figuren 4 und 5 die dargestellte Spritzgießdüsenvorrichtung 1 jeweils nur mit einem einzelnen Materialrohr 10 ausgestattet. Ferner zeigen die Figuren 4 b) und 5 b) jeweils Spritzgießdüsenvorrichtungen 1, deren Materialrohre 10 mit einer Düsenspitze 14 ausgestattet sind, welche zur Aufnahme einer Verschlussnadel ausgebildet sind. Hierzu ist ferner in dem Strömungskanal 11 eine Führung 22 für eine Verschlussnadel ausgebildet.

Alle Varianten der Fig. 1, 2, 3, 4 und 5 haben gemeinsam, dass jedes der Materialrohre 10, 10a, 10b, 10c in einem in Längsrichtung L ausgerichteten Abschnitt A mit Ausnahme der Heizvorrichtung 20, 20a, 20b, 20c am Außenumfang kontaktlos angeordnet ist, wobei der Abschnitt A benachbart zur Montageplatte 50 angeordnet ist und sich in Richtung des vorderen Endes 12, 12a erstreckt. Außerdem sind die Heizelemente der Heizvorrichtung 20, 20a, 20b, 20c in dem Abschnitt A mit Ausnahme der Materialrohre 10, 10a, 10b, 10c kontaktlos angeordnet. Ausgenommen hiervon sind allerdings die Anschlussleitungen 21a, 21b, 21c, die zu den Heizelementen führen. Man erkennt, dass die Länge des Abschnitts A in Längsrichtung L mehr als die Hälfte der Gesamtlänge des Materialrohres 10, 10a, 10b, 10c in Längsrichtung L beträgt. Der Abschnitt A erstreckt sich jeweils vom Verteiler bis zum vorderen Ende 12, 12a des Materialrohres 10, 10a, 10b, 10c.

Gemein haben die Varianten der Figuren 1 bis 5 ein Gehäuse, welches zumindest einen einstückigen Abstandshalter 44 aufweist, an dem die Führungshülsen 30, 30a, 30b, 30c befestigt sind. Jedes der Materialrohre 10a, 10b, 10c ist dabei mit dem vorderen Ende 12a innerhalb einer Führungshülse 30, 30a, 30b, 30c angeordnet und ragt mit dem hinteren Ende 13a sowie dem Anschlag 17a aus einem hinteren Hülsenende 31, 31a, 31b, 31c der Führungshülse 30, 30a, 30b, 30c heraus. Zwischen dem Materialrohr 10a, 10b, 10c und der Führungshülse 30, 30a, 30b, 30c ist ein Luftspalt S1, S2 ausgebildet ist. Außerdem ist das Materialrohr 10, 10a, 10b, 10c am hinteren Hülsenende 31, 31a, 31b, 31c berührungslos zur Führungshülse 30, 30a, 30b, 30c.

Man erkennt, dass die Führungshülse 30, 30a, 30b, 30c in Richtung hinteres Hülsenende 31, 31a, 31b, 31c über wenigstens zwei Drittel seiner Gesamtlänge X berührungslos zum Materialrohr 10, 10a, 10b, 10c ist. Insbesondere stützt sich die Führungshülse 30, 30a, 30b, 30c ausschließlich mit einem vorderen Hülsenende 32, 32a am vorderen Ende 12, 12a des Materialrohrs 10, 10a, 10b, 10c am Materialrohr 10, 10a, 10b, 10c ab. Das vordere Hülsenende 32, 32a besteht dabei aus Titan. Bei den Führungshülsen 30, 30a, 30b, 30c handelt es sich um Gleichteile. Das hintere Hülsenende 31, 31a, 31b, 31c der Führungshülsen 30, 30a, 30b, 30c ist in Längsrichtung L beabstandet von der Montageplatte 50 angeordnet.

Die Führungshülsen 30, 30a, 30b, 30c sind jeweils zweiteilig ausgebildet, wobei das vordere Hülsenende 32, 32a aus einem ersten Material und das hintere Hülsenende 31, 31a, 31b, 31c aus einem zweiten Material besteht. Das vordere Hülsenende 32, 32a ist jeweils an einer Koppelstelle mit dem hinteren Hülsenende 31, 31a, 31b, 31c verbunden. Das erste Material besteht aus einem weniger stark wärmeleitenden Metall, hier insbesondere Titan, als das hintere Hülsenende 31, 31a, 31b, 31c.

Die in den Figuren 1 bis 5 dargestellten Varianten unterscheiden sich im Wesentlichen durch den Aufbau des Gehäuses, in dem die Materialrohre 10, 10a, 10b, 10c angeordnet sind, bzw. in der Art der Lagerung der Führungshülsen 30, 30a, 30b, 30c.

In der Variante der Figuren 1 bis 3 ist der Abstandshalter 44 auf einer ersten Seite mit einem Fixierelement 40 in Form einer Halteplatte verbunden, während er an einer zweiten Seite mit der Montageplatte 50 verbunden ist. Hierzu ist jeweils eine Schraube 47 im Bereich der Ecken des Fixierelements 40 durch das Fixierelement 40 und den Abstandshalter 44 geführt und in die Montageplatte 50 eingeschraubt. Neben einer Schraubverbindung kann auch jede andere lösbare oder permanente Verbindungsart zwischen Fixierelement 40 und Abstandshalter 44 einerseits und Abstandshalter 44 und Montageplatte 50 andererseits Anwendung finden. Beispielsweise kann der Abstandshalter 44 mit dem Fixierelement 40 und/oder der Montageplatte 50 verpresst, verschweißt, genietet, verstiftet, oder anderweitig dauerhaft oder lösbar verbunden sein. Eine lösbare Verbindung hat dabei den Vorteil, dass zur Wartung der Heizelemente die Spritzgießdüsenvorrichtung 1 leicht in ihre Einzelteile zerlegt werden kann.

Das Fixierelement 40 ist beabstandet zu jedem der Materialrohre 10a, 10b, 10c und der Heizvorrichtung 20a, 20b, 20c angeordnet. Jedes der Materialrohre 10a, 10b, 10c ragt durch jeweils eine Ausnehmung in dem Fixierelement 40 hindurch. Das Fixierelement 40 ist hierzu quer zur Längsrichtung L ausgerichtet. Der Abstandshalter 44 ist dabei als umlaufender Rahmen ausgebildet, der die Materialrohre 10a 10b 10c im Bereich zwischen Montageplatte 50 und Fixierelement 40 in radialer Richtung umschließt. In dem Rahmen sind seitliche Ausnehmungen 48 ausgebildet, durch die eine Kontaktierung der Heizelemente über die Anschlüsse 21a, 21b, 21c möglich ist.

Wie in Fig. 3 gut erkennbar ist, weisen die Führungshülsen 30a, 30b, 30c jeweils an ihrem hinteren Hülsenende 31a, 31b, 31c ein quer zur Längsrichtung L abstehendes Koppelmittel 33a, 33b in Form einer umlaufenden Auskragung auf. Das Koppelmittel 33a, 33b, 33c liegt in einer Aufnahmegeometrie 43 in dem Fixierelement 40 auf und ist zwischen dem Fixierelement 40 und dem Abstandshalter 44 eingeklemmt.

Auf der Unterseite des Fixierelements 40 sind, wie in Fig. 1 dargestellt ist, Positionierelemente 49 in Form von Stiften angeordnet. Die Positionierelemente 49 sind dabei dazu ausgebildet bei einem Einsetzen der Spritzgießdüsenvorrichtung 1 in ein Spritzgießwerkzeug die Spritzgießdüsenvorrichtung 1 in dem Werkzeug korrekt zu positionieren und auszurichten. Die Positionierelemente 49 sind dabei vorzugsweise einstückig mit dem Fixierelement 40 ausgebildet.

Die Figuren 4 a) und b) zeigen eine zu den Figuren 1 bis 3 alternative Lagerung der Führungshülse 30 in einem Abstandshalter 44. Hierzu weisen die Führungshülsen 30 an ihrem hinteren Hülsenende 31 ebenfalls eine Auskragung auf, an der jedoch anders als in den Figuren 1 bis 3 ein Koppelmittel 33 in Form eines Außengewindes angeordnet ist. In dem Abstandshalter 44 ist eine Aufnahmegeometrie 43 ausgebildet, welche ein Innengewinde aufweist, welches zu dem Außengewinde des Koppelmittels 33 gegenstückig ist. Folglich kann die Führungshülse 30 mit ihrem hinteren Ende in den Abstandshalter 44 eingeschraubt werden. Dabei ist die Aufnahmegeometrie 43 so ausgebildet, dass sie einen Anschlag für die Befestigung der Führungshülse 30 derart ausbildet, dass die Auskragung der Führungshülse 30 bei einem Einschrauben der Führungshülse 30 in die Aufnahmegeometrie 43 vollständig in der Aufnahmegeometrie 43 versinkt und nicht nach unten über den Abstandshalter 44 übersteht.

Zur Befestigung des Abstandshalters 44 an der Montageplatte 50 ist wiederum ein zusätzliches Fixierelement 40 vorgesehen, welche durch entsprechende Schrauben 47, welche von oben durch die Montageplatte 50 geführt werden, gegen die Montageplatte 50 verspannt werden kann, sodass der Abstandshalter zwischen Montageplatte 50 und Fixierelement 40 eingeklemmt wird. Aufgrund der vollständigen Versenkung der Auskragung der Führungshülse 30 in der Aufnahmegeometrie 43 des Abstandshalters 44, liegt in montiertem Zustand die Auskragung der Führungshülse 30 nicht auf der Oberseite des Fixierelements 40 auf. Folglich findet hier kein direkter Wärmeaustausch zwischen Fixierelement 40 und Führungshülse 30 statt. Dies ist insbesondere vorteilhaft, wenn es sich bei dem Fixierelement 40 um die gekühlte Formplatte eines Spritzgießwerkzeugs handelt.

In der Variante der Fig. 5 ist wie in Fig. 4 die Führungshülse 30 mittels eines entsprechenden Gewindes 33 in eine Aufnahmegeometrie 43 des Abstandshalters 44 eingeschraubt. Anders als in Fig. 4 ist hier jedoch der Abstandshalter 44 direkt mit der Montageplatte 50 verschraubt und nicht über ein zusätzliches Fixierelement 40 verspannt. Zur Festlegung der Spritzgießdüsenvorrichtung 1 an einer Formplatte 40 ist daher eine zusätzliche Befestigung vorgesehen. Hierzu ist ein zusätzlicher Abstandshalter 60 in eine entsprechende Ausnehmung in der Montageplatte 50 eingeschraubt. Durch den Abstandshalter 60 ist wiederum eine Schraube 61 hindurchgeführt, welche in die Formplatte 40 eingreift und die Formplatte 40 gegen den Abstandshalter 60 zieht. Die Länge des Abstandshalters 60 definiert folglich den Abstand zwischen der Montageplatte 50 und der Formplatte 40. Ist dabei der Abstandshalter 60 länger als der Abstandshalter 44, liegt die Führungshülse 30 nicht auf der Oberseite der Formplatte 40 auf. So kann wiederum der Wärmeaustausch zwischen Formplatte 40 und Führungshülse 30 reduziert werden.

**Bezugszeichenliste**

| | | | |
|---|---|---|---|
| 1 | Spritzgießdüsenvorrichtung | 22 | Führung für Verschlussnadel |
| 10a | erstes Materialrohr | 30a | erste Führungshülse |
| 10b | zweites Materialrohr | 30b | zweite Führungshülse |
| 10c | drittes Materialrohr | 30c | dritte Führungshülse |
| 11a | Strömungskanal | 31a | erstes hinteres Hülsenende |
| 12a | vorderes Ende (Materialrohr) | 31b | zweites hinteres Hülsenende |
| 13a | hinteres Ende (Materialrohr) | 31c | drittes hinteres Hülsenende |
| | | 32a | vorderes Hülsenende |
| 14a | erste Düsenspitze | 33a | Koppelmittel |
| 14b | zweite Düsenspitze | | |
| 14c | dritte Düsenspitze | 40 | Fixierelement |
| | | 43 | Aufnahmegeometrien |
| 15a | Austrittsöffnung | 44 | Abstandshalter |
| | | 47 | Schraube |
| 16a | Eintrittsöffnung (Strömungskanal) | 48 | Ausnehmung |
| | | 49 | Positionierelement |
| 17a | Anschlag | | |
| | | 50 | Montageplatte |
| 19a | Koppelmittel | 51 | Heizung |
| 19b | Koppelmittel | 52 | Eintrittsöffnung |
| 19c | Koppelmittel | 60 | Abstandshalter |
| | | 61 | Schraube |
| 20a | erste Heizvorrichtung | | |
| 20b | zweite Heizvorrichtung | A | Abschnitt |
| 20c | dritte Heizvorrichtung | L | Längsrichtung |
| 21a | Anschluss | S1 | erster Luftspalt |
| 21b | Anschluss | S2 | zweiter Luftspalt |
| 21c | Anschluss | X | Gesamtlänge (Führungshülse) |

## Patentansprüche

1. Spritzgießdüsenvorrichtung (1) mit wenigstens einem Materialrohr (10a, 10b, 10c),
▪ wobei sich das wenigstens eine Materialrohr (10a, 10b, 10c) in einer Längsrichtung (L) erstreckt,
▪ wobei in dem wenigstens einen Materialrohr (10a, 10b, 10c) ein Strömungskanal (11a) für eine fließfähige Masse (M) ausgebildet ist,
▪ wobei das wenigstens eine Materialrohr (10a, 10b, 10c) an einem vorderen Ende (12a) des Strömungskanals (11a) eine Düsenspitze (14a, 14b, 14c) mit wenigstens einer Austrittsöffnung (15a) für die fließfähige Masse (M) aufweist,
▪ wobei das wenigstens eine Materialrohr (10a, 10b, 10c) an einem hinteren Ende (13a) des Strömungskanals (11a) wenigstens eine Eintrittsöffnung (16a) für die fließfähige Masse (M) aufweist und an einer Montageplatte (50) festgelegt ist,
▪ wobei die Montageplatte (50) ein Verteiler eines Spritzgießwerkzeugs ist,
▪ wobei das wenigstens eine Materialrohr (10a, 10b, 10c) mit einer Heizvorrichtung (20a, 20b, 20c) beheizt ist,
▪ wobei das wenigstens eine Materialrohr (10a, 10b, 10c) in einem Gehäuse angeordnet ist und innerhalb des Gehäuses in einem in Längsrichtung (L) ausgerichteten Abschnitt (A) mit Ausnahme der Heizvorrichtung (20a, 20b, 20c) am Außenumfang kontaktlos angeordnet ist,
▪ wobei das Gehäuse einen einstückigen Abstandshalter (44) und je Materialrohr (10a, 10b, 10c) eine Führungshülse (30a, 30b, 30c) aufweist,
▪ wobei jede Führungshülse (30a, 30b, 30c) an dem Abstandshalter (44) befestigt ist, und
▪ wobei der Abstandshalter (44) an der Montageplatte (50) festlegbar ist und den Abstand zwischen Führungshülse (30a, 30b, 30c) und Montageplatte (50) definiert,
**dadurch gekennzeichnet,**
▪ dass der Abschnitt (A) benachbart zu der Montageplatte (50) angeordnet ist und der Abschnitt (A) sich jeweils von der Montageplatte (50) bis zu dem vorderen Ende (12a) des Materialrohres (10a, 10b, 10c) erstreckt.

2. Spritzgießdüsenvorrichtung (1) nach Anspruch 1, **dadurch gekennzeichnet, dass** der Abstandshalter (44) als umlaufender Rahmen ausgeführt ist, der das wenigstens eine Materialrohr (10a, 10b, 10c) radial einfasst und von dem wenigstens einen Materialrohr (10a, 10b, 10c) beabstandet ist.

3. Spritzgießdüsenvorrichtung (1) nach Anspruch 2, **dadurch gekennzeichnet, dass** der Rahmen wenigstens eine Ausnehmung (48) aufweist, durch die wenigstens ein Materialrohr (10a, 10b, 10c) von außerhalb des Rahmens zugänglich ist.

4. Spritzgießdüsenvorrichtung (1) nach einem der vorhergehenden Ansprüche, **dadurch gekennzeichnet, dass** die wenigstens eine Führungshülse (30a, 30b, 30c) ein Koppelmittel (33a, 33b, 33c) zur Festlegung der Führungshülse (30a, 30b, 30c) an dem Abstandshalter (44) aufweist.

5. Spritzgießdüsenvorrichtung (1) nach Anspruch 4, **dadurch gekennzeichnet, dass** es sich bei dem Koppelmittel (33a, 33b, 33c) um ein Außengewinde handelt.

6. Spritzgießdüsenvorrichtung (1) nach Anspruch 4, **dadurch gekennzeichnet, dass** es sich bei dem Koppelmittel (33a, 33b, 33c) um eine Auskragung an einem hinteren, der Montageplatte (50) zugewandten Ende (31) des wenigstens einen Materialrohrs (10a, 10b, 10c) handelt, wobei das Gehäuse ein zusätzliches Fixierelement (40) aufweist, wobei das Fixierelement (40) so an dem Abstandshalter (44) festlegbar ist, dass das Koppelmittel (33a, 33b, 33c) zwischen dem Fixierelement (40) und dem Abstandshalter (44) eingeklemmt ist.

7. Spritzgießdüsenvorrichtung (1) nach Anspruch 6, **dadurch gekennzeichnet, dass** in dem Abstandshalter (44) und/oder dem Fixierelement (40) eine Aufnahmegeometrie für das Koppelmittel (33a, 33b, 33c) ausgebildet ist.

8. Spritzgießdüsenvorrichtung (1) nach einem der vorhergehenden Ansprüche, **dadurch gekennzeichnet, dass** der Abstandshalter (44) mittelbar oder unmittelbar mit der Montageplatte (50) verschraubt ist.

9. Spritzgießdüsenvorrichtung (1) nach einem der vorhergehenden Ansprüche, **dadurch gekennzeichnet, dass** die Heizvorrichtung (20a, 20b, 20c) in dem Abschnitt (A) mit Ausnahme des wenigstens einen Materialrohrs (10a, 10b, 10c) kontaktlos angeordnet ist.

10. Spritzgießdüsenvorrichtung (1) nach einem der vorhergehenden Ansprüche, **dadurch gekennzeichnet, dass** die Länge des Abschnitts (A) in Längsrichtung (L) wenigstens die Hälfte der Gesamtlänge des wenigstens einen Materialrohres (10a, 10b, 10c) beträgt.

11. Spritzgießdüsenvorrichtung (1) nach einem der vorhergehenden Ansprüche, **dadurch gekennzeichnet, dass** an dem hinteren Ende (13a) des wenigstens einen Materialrohrs (10a, 10b, 10c) ein Koppelmittel (19a) zum Festlegen des Materialrohrs (10a, 10b, 10c) an der Montageplatte (50) ausgebildet ist.

12. Spritzgießdüsenvorrichtung (1) nach einem der vorhergehenden Ansprüche, **dadurch gekennzeichnet, dass** an dem Abstandshalter (44) wenigstens ein Positionierelement (49) ausgebildet ist, welches zur Positionierung der Spritzgießdüsenvorrichtung (1) in einem Spritzgießwerkzeug ausgebildet ist.

13. Spritzgießdüsenvorrichtung (1) nach einem der vorhergehenden Ansprüche, **dadurch gekennzeichnet, dass** sich die wenigstens eine Führungshülse (30a, 30b, 30c) ausschließlich am vorderen Ende (12a) des wenigstens einen Materialrohrs (10a, 10b, 10c) mittelbar oder unmittelbar abstützt.

14. Spritzgießdüsenvorrichtung (1) nach Anspruch 13, **dadurch gekennzeichnet, dass** die wenigstens eine Führungshülse (30a, 30b, 30c) zweigeteilt ist, wobei ein vorderes Hülsenende aus einem ersten Material besteht und wobei ein hinteres Hülsenende aus einem zweiten Material besteht, wobei das vordere Hülsenende mit dem hinteren Hülsenende verbunden ist.

## Claims

1. Injection moulding device (1) comprising at least one material pipe (10a, 10b, 10c),
- wherein the at least one material pipe (10a, 10b, 10c) extends in a longitudinal direction (L),
- wherein a flow channel (11a) for a fluid substance (M) is formed in the at least one material pipe (10a, 10b, 10c),
- wherein, at a front end (12a) of the flow channel (11a), the at least one material pipe (10a, 10b, 10c) has a nozzle tip (14a, 14b, 14c) with at least one outlet opening (15a) for the fluid substance (M),
- wherein, at a rear end (13a) of the flow channel (11a), the at least one material pipe (10a, 10b, 10c) has at least one inlet opening (16a) for the fluid substance (M) and is attached to a mounting plate (50),
- wherein the mounting plate (50) is a manifold of an injection moulding tool,
- wherein the at least one material pipe (10a, 10b, 10c) is heated by means of a heating device (20a, 20b, 20c),
- wherein the at least one material pipe (10a, 10b, 10c) is arranged in a housing and, inside the housing, is arranged in a section (A) orientated in longitudinal direction (L), on the outer circumference with no contact except to the heating device (20a, 20b, 20c),
- wherein the housing has a one-piece spacer (44) and has a guide sleeve (30a, 30b, 30c) for each material pipe (10a, 10b, 10c),
- wherein each guide sleeve (30a, 30b, 30c) is secured to the spacer (44), and
- wherein the spacer (44) can be attached on the mounting plate (50) and defines the separation between guide sleeve (30a, 30b, 30c) and mounting plate (50),
**characterised in**
- **that** the section (A) is arranged adjacent to the mounting plate (50) and the section (A) extends respectively from the mounting plate (50) to the front end (12a) of the material pipe (10a, 10b, 10c).

2. Injection moulding device (1) according to claim 1, **characterised in that** the spacer (44) is designed as a circumferential frame which radially surrounds the at least one material pipe (10a, 10b, 10c) and is spaced apart from the at least one material pipe (10a, 10b, 10c).

3. Injection moulding device (1) according to claim 2, **characterised in that** the frame has at least one recess (48), through which at least one material pipe (10a, 10b, 10c) is accessible from outside of the frame.

4. Injection moulding device (1) according to any one of the preceding claims, **characterised in that** the at least one guide sleeve (30a, 30b, 30c) has a coupling means (33a, 33b, 33c) for attaching the guide sleeve (30a, 30b, 30c) to the spacer (44).

5. Injection moulding device (1) according to claim 4, **characterised in that** the coupling means (33a, 33b, 33c) is an external thread.

6. Injection moulding device (1) according to claim 4, **characterised in that** the coupling means (33a, 33b, 33c) is a projection on a rear end (31) of the at least one material pipe (10a, 10b, 10c) facing the mounting plate (50), wherein the housing has an additional fixing element (40), wherein the fixing element (40) can be attached to the spacer (44) in such a way that the coupling means (33a, 33b, 33c) is clamped between the fixing element (40) and the spacer (44).

7. Injection moulding device (1) according to claim 6, **characterised in that** a receiving geometry for the coupling means (33a, 33b, 33c) is formed in the spacer (44) and/or the fixing element (40).

8. Injection moulding device (1) according to any one of the preceding claims, **characterised in that** the spacer (44) is directly or indirectly screwed to the mounting plate (50).

9. Injection moulding device (1) according to any one of the preceding claims, **characterised in that** the heating device (20a, 20b, 20c) is arranged in the section (A) with no contact except to the at least one material pipe (10a, 10b, 10c).

10. Injection moulding device (1) according to any one of the preceding claims, **characterised in that** the length of the section (A) in the longitudinal direction (L) is at least half the overall length of the at least one material pipe (10a, 10b, 10c).

11. Injection moulding device (1) according to any one of the preceding claims, **characterised in that** a coupling means (19a) for attaching the material pipes (10a, 10b, 10c) to the mounting plate (50) is formed at the rear end (13a) of the at least one material pipe (10a, 10b, 10c).

12. Injection moulding device (1) according to any one of the preceding claims, **characterised in that** at least one positioning element (49) is formed on the spacer (44), which is designed for positioning the injection moulding device (1) in an injection moulding tool.

13. Injection moulding device (1) according to any one of the preceding claims, **characterised in that** the at least one guide sleeve (30a, 30b, 30c) is directly or indirectly supported exclusively at the front-end (12a) of the at least one material pipe (10a, 10b, 10c).

14. Injection moulding device (1) according to claim 13, **characterised in that** the at least one guide sleeve (30a, 30b, 30c) is divided into two, wherein a front sleeve end is made of a first material and wherein a rear sleeve end is made of a second material, the front sleeve end being connected to the rear sleeve end.

## Revendications

1. Dispositif de buse de moulage par injection (1) comprenant au moins un tube de matière (10a, 10b, 10c),
▪ dans lequel le au moins un tube de matière (10a, 10b, 10c) s'étend dans une direction longitudinale (L),
▪ dans lequel un canal d'écoulement (11a) pour une masse fluide (M) est façonné dans le au moins un tube de matière (10a, 10b, 10c),
▪ dans lequel le au moins un tube de matière (10a, 10b, 10c) comporte à une extrémité avant (12a) du canal d'écoulement (11a) une buse (14a, 14b, 14c) avec au moins un orifice de sortie (15a) pour la masse fluide (M),
▪ dans lequel le au moins un tube de matière (10a, 10b, 10c) comporte à une extrémité arrière (13a) du canal d'écoulement (11a) au moins un orifice d'entrée (16a) pour la masse fluide (M) et est fixé sur une plaque de montage (50),
▪ dans lequel la plaque de montage (50) est un collecteur d'un outil de moulage par injection,
▪ dans lequel le au moins un tube de matière (10a, 10b, 10c) est chauffé avec un dispositif de chauffage (20a, 20b, 20c),
▪ dans lequel le au moins un tube de matière (10a, 10b, 10c) est situé dans un boîtier et est agencé sans contact à l'intérieur du boîtier dans une section (A) orientée dans la direction longitudinale (L) à l'exception du dispositif de chauffage (20a, 20b, 20c) situé sur le pourtour,
▪ dans lequel le boîtier comporte une pièce d'écartement monobloc (44) et pour chaque tube de matière (10a, 10b, 10c) un manchon de guidage (30a, 30b, 30c),
▪ dans lequel chaque manchon de guidage (30a, 30b, 30c) est fixé sur la pièce d'écartement (44), et
▪ dans lequel la pièce d'écartement (44) peut être fixée contre la plaque de montage (50) et définit l'espace entre le manchon de guidage (30a, 30b, 30c), et la plaque de montage (50),
**caractérisé en ce que**
▪ la section (A) est agencée de manière adjacente à la plaque de montage (50) et la section (A) s'étend respectivement de la plaque de montage (50) jusqu'à l'extrémité avant (12a) du tube de matière (10a, 10b, 10c).

2. Dispositif de buse de moulage par injection (1) selon la revendication 1, **caractérisé en ce que** la pièce d'écartement (44) est conçue sous la forme d'un cadre circonférentiel qui encadre radialement le au moins un tube de matière (10a, 10b, 10c) et est espacé du au moins un tube de matière (10a, 10b, 10c).

3. Dispositif de buse de moulage par injection (1) selon la revendication 2, **caractérisé en ce que** le cadre comporte au moins un évidement (48) à travers lequel le au moins un tube de matière (10a, 10b, 10c) est accessible par l'extérieur du cadre.

4. Dispositif de buse de moulage par injection (1) selon l'une quelconque des revendications précédentes, **caractérisé en ce que** le au moins un manchon de guidage (30a, 30b, 30c) présente un moyen de couplage (33a, 33b, 33c) permettant la fixation du manchon de guidage (30a, 30b, 30c) sur la pièce d'écartement (44).

5. Dispositif de buse de moulage par injection (1) selon la revendication 4, **caractérisé en ce que** le moyen de couplage (33a, 33b, 33c) est un filetage extérieur.

6. Dispositif de buse de moulage par injection (1) selon la revendication 4, **caractérisé en ce que** le moyen de couplage (33a, 33b, 33c) offre une projection sur une extrémité (31) arrière dirigée vers la plaque de montage (50) du au moins un tube de matière (10a, 10b, 10c), dans lequel le boîtier présente un élément de fixation supplémentaire (40), dans lequel l'élément de fixation (40) peut être fixé sur la pièce d'écartement (44) de telle sorte que le moyen de couplage (33a, 33b, 33c) est serré entre l'élément de fixation (40) et la pièce d'écartement (44).

7. Dispositif de buse de moulage par injection (1) selon la revendication 6, **caractérisé en ce qu'**une géométrie de réception pour le moyen de couplage (33a, 33b, 33c) est configurée dans la pièce d'écartement (44) et/ou l'élément de fixation (40).

8. Dispositif de buse de moulage par injection (1) selon l'une quelconque des revendications précédentes, **caractérisé en ce que** la pièce d'écartement (44) est vissée directement ou indirectement sur la plaque de montage (50).

9. Dispositif de buse de moulage par injection (1) selon l'une quelconque des revendications précédentes, **caractérisé en ce que** le dispositif de chauffage (20a, 20b, 20c) est agencé sans contact dans la section (A) à l'exception du au moins un tube de matière (10a, 10b, 10c).

10. Dispositif de buse de moulage par injection (1) selon l'une quelconque des revendications précédentes, **caractérisé en ce que** la longueur de la section (A) dans la direction longitudinale (L) représente au moins la moitié de la longueur totale du au moins un tube de matière (10a, 10b, 10c).

11. Dispositif de buse de moulage par injection (1) selon l'une quelconque des revendications précédentes, **caractérisé en ce qu'**un moyen de couplage (19a) permettant la fixation du tube de matière (10a, 10b, 10c) sur la plaque de montage (50) est configuré à l'extrémité arrière (13a) du au moins un tube de matière (10a, 10b, 10c).

12. Dispositif de buse de moulage par injection (1) selon l'une quelconque des revendications précédentes, **caractérisé en ce que** la pièce d'écartement (44) est conçue avec au moins un élément de positionnement (49), lequel est configuré pour positionner le dispositif de buse de moulage par injection (1) dans un outil de moulage par injection.

13. Dispositif de buse de moulage par injection (1) selon l'une quelconque des revendications précédentes, **caractérisé en ce que** le au moins un manchon de guidage (30a, 30b, 30c) vient en appui direct ou indirect uniquement contre l'extrémité avant (12a) du au moins un tube de matière (10a, 10b, 10c).

14. Dispositif de buse de moulage par injection (1) selon la revendication 13, **caractérisé en ce que** le au moins un manchon de guidage (30a, 30b, 30c) est divisé en deux parties, dans lequel une extrémité de manchon avant est formée d'un premier matériau et une extrémité de manchon arrière est formée d'un second matériau, l'extrémité de manchon avant étant reliée à l'extrémité de manchon arrière.
